# EUROPEAN PATENT APPLICATION

(11) **EP 2 645 676 A1**
(43) Date of publication of application: **02.10.2013**
(21) Application number: 12382129.0
(22) Date of filing: 30.03.2012
(51) Int. Cl.: H04L 29/08

(54) **Unified communications history**

(71) Applicant: Telefónica, S.A., 28013 Madrid (ES); JaJah Ltd, Ra'Anana (IL)
(72) Inventor: Neystadt, John, Ra'Anana (IL); Keyser, Benjamin, 28013 Madrid (ES); Artunedo Guillen, David, Ra'Anana (IL); Serna Pozuelo, Jorge, 28013 Madrid (ES); Massover, Alex, Ra'Anana (IL); Hoffman, Doron, Ra'Anana (IL); Asadurian, Marat, Ra'Anana (IL)
(74) Representative: Cordina, Kevin John

(57) **Abstract**

A communication system providing a plurality of telecommunications services, wherein data relating to those services is gathered by a single service for transmission to users. Data relating to communications using a range of services is therefore available at a single location.

## Description

### Technical Field

This disclosure relates to a multiple-format communication system. In particular, but not exclusively, the disclosure relates to a system for storing data related to communications in multiple formats.

### Background

It is becoming common for mobile communication devices to enable multiple methods of communication. For example, a mobile device may provide telephony services, as well as messaging services, such as Instant Messaging and video calling. Telephone and messaging methods of communication can generally be distinguished on the basis that telephone communications are two-way, whereas messaging communications are one-way (albeit a number one-way communications form a two-way conversation.

Telephone and messaging communications are typically provided by different services and systems. For example telephony may be provided through native functionality on a mobile device and a GSM network, whereas messaging services may be provided by an application on the mobile device and a messaging service running at a networked server. Telephony may also be provided by a VoIP service utilizing an application on the mobile device and an IP connection to a remote server or to a second device in a peer-to-peer system.

The provision of each communication method by a different system limits the ability to unify data on communications using each method into a single user experience.

The embodiments described below are not limited to implementations which solve any or all of the disadvantages of known communication systems.

### Summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A communication system providing a plurality of telecommunications services, wherein data relating to those services is gathered by a single service for transmission to users. Data relating to communications using a range of services is therefore available at a single location.

There is provided a communications system, comprising a plurality of communication services, and a communications history service, wherein each of the plurality of communication services are configured to transmit data representative of at least one parameter of communications implemented using that service to the communications history service.

The communication services may comprise a networked server configured to direct communications data between first and second terminal devices.

At least one of the communication services may be a telephony service, and/or a messaging service.

At least one of the communication services may be a telephony service and comprises a networked server configured to direct audio or video data between first and second terminal devices.

At least one of the communication services may be a messaging service and comprises a networked server configured to direct message text data between first and second terminal devices.

The communication services may connect with terminating devices via a network to provide communications between those terminating devices.

The at least one parameter may comprise the time and/or date of the communication, parties of the communication, the type of communication, or communications content.

The communication history service may comprise a networked server configured to receive and store the data representative of at least one parameter of communications.

The communication history service may be accessible by a terminal device to view the data representative of at least one parameter of communications.

The communications system may further comprise a media storage service for recording and storing media data, wherein at least one of the communication services is configured to transmit media data of communications implemented using that communication service to the media storage service.

The media storage service is connected to the communications history service to correlate recorded media data with the data representative of at least one parameter of the communication to which the media data relates.

There is also provide a method of presenting at least one parameter of a communication to a user, comprising the steps of receiving data at a communications history service from a plurality of communication services, the data being representative of at least one parameter of a communication implemented utilised that service, and transmitting the data to a terminating device for display on that terminating device.

The communication services may comprise at least one telephony service and at least one messaging service.

The method may further comprise the step of receiving media data at a media storage service from at least one of the plurality of communication services, the media data representing communications implemented by the communication services.

There is also provided a network of computer systems, comprising a first computer system providing a first communications service to terminal devices, a second computer system providing a second communications service to the terminal devices, a third computer system providing communication history services, wherein the first and second computer systems are configured to transmit data representative of at least one parameter of communications implemented using that service to the third computer system.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc and do not include propagated signals. The software can be suitable for execution on a parallel processor or a serial processor such that the method steps may be carried out in any suitable order, or simultaneously.

This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

### Brief Description of the Drawings

Embodiments of the invention will be described, by way of example, with reference to the following drawings, in which:
Figures 1 and 2 are schematic diagrams of systems for providing communications, and
Figure 3 is a schematic diagram of an exemplary computing device.

Common reference numerals are used throughout the figures to indicate similar features.

### Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

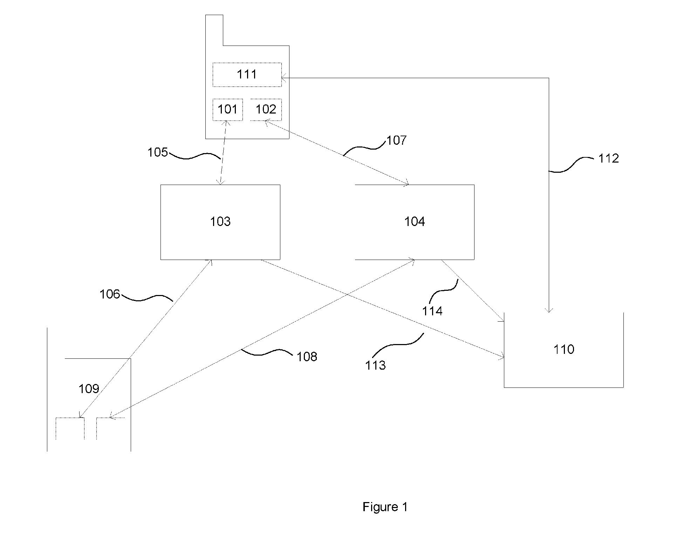

Figure 1 shows a schematic diagram of a system for providing unified communication information across a plurality of communication methods. A mobile device 100 provides a plurality of communication services, for example messaging 101 and VoIP 102 services. Those services are provided by communication applications running on the mobile device which may be either installed applications from third parties or native applications provided as part of the mobile device's operating system. The communication applications 101, 102 provide communication services in conjunction with communication servers 103, 104 which reside remotely in a network, for example, the internet or a corporate network, and can be accessed by the communication applications 101, 102. VoIP server 103 is contacted by the VoIP communication application 101 via a data connection 105 and facilitates VoIP calls to a third party 109 via further a further data connection 106. In the same way, messaging application 102 provides messaging services in conjunction with messaging server 104 via data connections 107, 108. The data connections 105 - 108 are provided through mobile networks and the internet in the conventional manner. With regard to providing communications services, the operation of the communication applications 101, 102 and servers 103, 104 is conventional.

Communication servers 103, 104 are in communication 113, 114 with a communications history system 110 provided at a location connected to the internet for data communication with the communication servers 103, 104 and the mobile device 100.

Communication servers 103, 104 are configured to forward details of communications by mobile device 100 to the communications history system 110. For example, the communication servers 103, 104 may forward details of participants in a communication and the timing of that communication. Further details may also be provided including the content of the communication, for example an audio file for VoIP communications, or message text exchanged in a messaging communication. Communications history system 110 receives the data from the communication servers 103, 104 and stores that data for future retrieval. As discussed in more detail below, conventional database and indexing techniques may be utilized to store and access the data most efficiently.

A communications history application 111 is provided on the mobile device 100 which is in communication 112 with the communications history system 110. Application 111 provides an interface for a user to access the data held in the communications history system 110. Since communications history system 110 holds a record of communications made using both the VoIP 101 and messaging 102 application, history application 111 provides the user with a unified record of all communications through a single user interface. The user thereby has access to all of their communication data via a single interface, providing an improvement in user experience and access to information.

The exemplary system of Figure 1 utilises two communication methods (VoIP & messaging), but as will be apparent to the Skilled Person the principles can be extended to any number of communication methods by configuring the respective servers to forward data to the history system 110. For example, elements of a GSM mobile telephony system may be configured to forward call data and SMS messages to the history service to unify GSM voice call data with that of other communication methods.

In a further embodiment, the applications 101, 102, at the mobile device 100 may be configured to transmit data directly to the history system 110. Such a configuration may be less efficient than that shown in Figure 1 as there is duplication of information transmission, but configuration of the applications 101, 102 may be more easily accomplished than modification of the communication servers 103, 104. This may be particularly the case for GSM data. Typically the GSM network will be provided by a different entity to the other services and accordingly access to the data in the network may be difficult. However, deployment of an application to a mobile device to log and transmit information on GSM communications (for example voice calls) may be more easily accomplished. The data that can be gathered and transmitted may be restricted, but this may still lead to an improved user experience over prior art systems.

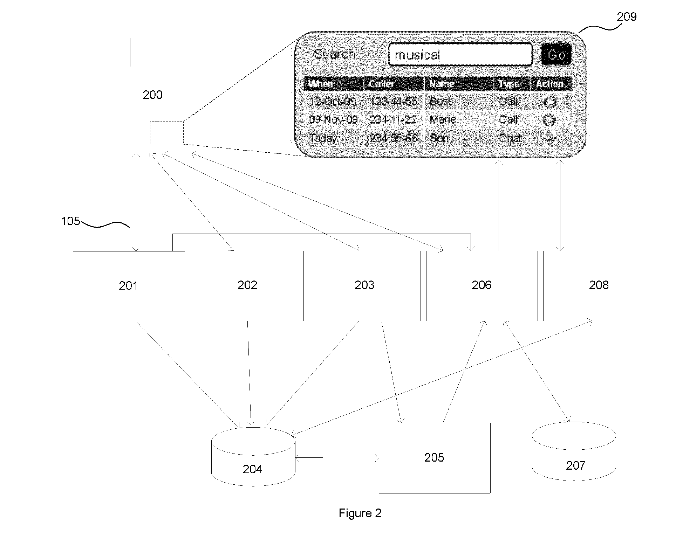

Figure 2 shows a further schematic diagram of a system for gathering communication data. A mobile device 200 has applications to provide multiple methods of communication in conjunction with messaging service 201, call signalling service 202, and media service 203.

In addition to being connected to mobile device 200, those services 201, 202, 203 are also connected to (a) remote device(s) (not shown) for the establishment of communications between device 200 and the remote device(s).

Messaging service 201 provides messaging communications in conjunction with a messaging application on the mobile device. Call signalling service 202 provides call set-up and operation services. For example, the service may arrange connections between mobile devices to enable a call, provide directory services, and close connections at the end of a call. Media service 203 provides for transmission of media between parties in a call, for example the routing of audio data between two parties conducting a VoIP call.

Archive system 204 is connected to services 201, 202 to receive and store data transmitted by those services. For example, the services 201, 202, 203 may transmit data about communications (for example, parties involved or timing information) to the archive system 204. Archive system 204 stores and indexes the data for retrieval. Archive system 204 may utilise known data storage techniques to efficiently store, index, and offer for retrieval, the data transmitted to it. Archive system 204 may include retention processes to remove data after predefined periods.

Media Service 203 may be configured to transmit the media data for a call to a recording service 205. Recording service 205 processes the media data into media files for later retrieval from a storage service 206, 207. Recording service 205 and archive system 204 are connected to enable data received at each service to be correlated. For example, details of parties to a call stored at archive system 204 are correlated with media files stored at recording service 205 such that the parties related to a particular media file are known. This correlation may be performing using any known technique which establishes links between diverse storage systems. For example, each communication may be assigned a unique ID, (for example using SIP Call-Id or IP-port number of the RTP media stream inside the signalling protocol) which is stored with the data in the communications archive and with the media data. In alternative embodiments archive system 204 and recording service 205 may be provided as a single system.

Messaging service 201 and media service 203 are configured to route communications data to both the destination party, and also to the communication archive 204 and/or recording service 205. This duplication of data may be achieved by specific services being configured to transmit all outgoing data to multiple destinations, or by configuration of an appropriate network component in a promiscuous mode to receive all data as well as transmitting it to the required destination.

Recording service 205 may be configured to perform various functions on the received media data. For example the recording service may store the media data in a known media encoding format, with separate channels (i.e. each speaker in a conversation) in separate files. Storing the media data may require transcoding from the format used by the communications service, into a format more suitable for storing and later retrieval.

A media storage service 206 is provided to receive and store media data for later access and is connected to the recording service 205. For example, when a call is completed recording service 205 may transmit files containing a recording of the call to the media storage service 206. Where applicable data correlating the files with entries stored in the archive system 204 may also be transmitted such that that correlation is maintained. Recording service 205 may transmit completed recording files at the termination of a call, or may transmit partial files of sections of a call during that call to reduce the size of each file. Media storage service 206 may utilise a media storage system 207 for storing the media data. Recordings of voice and video call can generate very large quantities of data which may be more efficiently stored by a system 207 adapted particularly for holding such data. Storage service 206 may provide interfaces for efficient storage of, and access to, media stored in system 207.

Communications history service 208 is connected to the communication archive 204 and a communications history application 209 on the mobile device 200. Application 209 provides a user interface for viewing entries in the communication archive 204 and instructing actions to be performed in relation to the selected entry. In the exemplary screen shot of Figure 2, each row of the table represents a communication and shows the date, other participant and type of communication. An option against each allows actions to be instructed, for example the user may wish to access more details on the timing of the call, or retrieve the text of messages. That information is retrieved by the application from the communications history service 208 and archive 204 and presented to the user. A search option is also provided to allow the user to search the history. Communications history service 208 acts as an interface to communications archive 204 to facilitate searching and retrieval of information from the archive as well implementing suitable authentication systems to control access to the data in the communications archive 204. The authentication systems may be configured such that both parties to each communication can access the data, or only the caller may be granted access.

In alternative embodiments the history service 208 may acquire some data from applications on the mobile device, rather than from the communications archive 206. For example, if call data for GSM calls cannot be obtained from the GSM network it may be possible to obtain that data from applications or systems on the mobile device. Furthermore, applications of the mobile device may be utilised to supplement the presented data. For example, data from a contacts list may be provided to display names of contacts rather than numbers.

A user may wish to play back media (e.g. audio or video recordings captured by recording service 205) relating to a communication stored by the media storage service 206 in the storage system 207. In this circumstance the history application 209 issues a request for the appropriate file to the storage service 206, which retrieves the relevant file and returns it to the history application 209 for playing. The correlation information described hereinbefore enables the respective file to be retrieved for each communication.

The media storage service 206 and system 207 may be utilised to store media data for later access by various parties. For example if a user wishes to communicate an image or video file to a recipient, an application on a mobile device may transmit that file to the storage service 206 for storage in the system 207. A reference or link to that file may then be transmitted to the third party by which they can access the file.

Specific examples utilising the system of Figure 2 for various communication methods will now be described.

When a user wishes to send a text message, for example utilising a messaging service 201, the user creates the message on the mobile device 200 and indicates the destination. The message is transmitted to messaging service 201, for example utilising a known protocol such as SIP or XMPP. Messaging service 201 forwards the message to the recipient as in normal systems, but a copy is also sent, with any other relevant details (for example, source, destination, timing), to archive system 204 where it is indexed and stored for later retrieval. Where a message forms part of a conversation, messaging service 201 may provide an identifier to the archive system 204 to allow the messages to be related and hence retrieved as a conversation rather than discrete messages. This relationship may also be built by the mobile device 200, or the archive system 204 as is most appropriate for each system.

The messaging system may allow the transmittal of multimedia messages, for example binary media such as pictures or video, or other binary files. The attachment may be transmitted directly to the storage service 206 for storage in system 207. The storage service 206 may authenticate the user of device 200 to ensure they are permitted to store the file, and may also verify other parameters such as file size. Provided these are complied with the file will be stored for access by the other party. The storage service 206 may return an identifier and access details to the mobile device 200 for transmission to the other party such that they can access the file, for example by following a link included in the message to which the binary file was attached. The actual message is stored as described hereinbefore. Data correlating the binary file stored in the storage system 207 and the entry in the archive service 204 is stored to enable the message and attachment to be retrieved together. In an alternative example, the binary attachment may be attached to the actual message and transmitted to the destination by the messaging system. The messaging system, in addition to transmitting the message and details to the archive system 204, transmits the file to the storage service for storage. As described previously, the message and attachment are correlated to allow retrieval.

When initiating a voice or video call, call signalling service 202 processes the call and creates an entry in the archive system 204. The entry may contain details of the two (or more) parties involved and the timing of the call. The call is configured by the signalling service 202, and once established the media service 203 transmits and receives media data (e.g. voice and video) between the participants in the call. The media data transmitted may include data indicating the identity of separate streams (for example, from caller to callee or vice versa) such that media originating at each participant can be separately identified. The call may be handled using a known protocol such as RTP. As noted previously, media service 203 is configured to transmit all data relating to the call to recording service 205 which records the media, and transmits the recording the storage service 206, as explained previously.

These examples demonstrate that the system of Figure 2 can be utilised to monitor and store information relating to communications made using different methods, including messaging and telephony.

The foregoing description with regard to voice and video calls has primarily referred to calls made using VoIP technology. However, as will be appreciated the techniques are equally applicable to GSM (or equivalent) protocols by configuring the GSM network components to behave as described hereinbefore.

The applications on the mobile device may comprise configuration options to allow users to configure which details they wish to be stored for communications of different types. Similarly, in order to record both directions of a message or voice communication permission may be required from the callee before the system can store those details. Processes to obtain this permission may be implemented using any known technique.

The term VoIP is not intended to restrict communications to only voice calls, but rather to include video calls and messaging. The term is therefore used to describe the general principle of transmitting a real-time communication over a packet-switched system as opposed to a conventional channel-switched communications system.

The term 'service' is utilised to indicate a program or system which provides certain functions. For example, a messaging service may provide the function of forwarding messages between two entities. The service may take the form of a program running on a single computer system, or may be provided by a plurality of computing systems configured to work together to provide the functions. The functions may be accessed and utilised via a network system, for example the internet. Any service may be implemented in any way known to the Skilled Person. Although the various services have been described separately, one of more of the services may be provided as part of a single service, or by a single program of computer system. The description of the services separately is not intended to require any logical or physical separation.

Where the term 'connected' has been utilised in this document, it is not intended to require a permanent, always-on, connection. Rather it is used in the sense that the connected entities are connected, when required, to exchange data. For example two entities would be connected by the transmission of data from one entity to another through an IP network.

The foregoing description has been in respect of a mobile device, but as will be appreciated any form of computing device may be utilised in place of the mobile device. The generic term 'terminating device' may be utilised to describe devices between which communications are conducted.

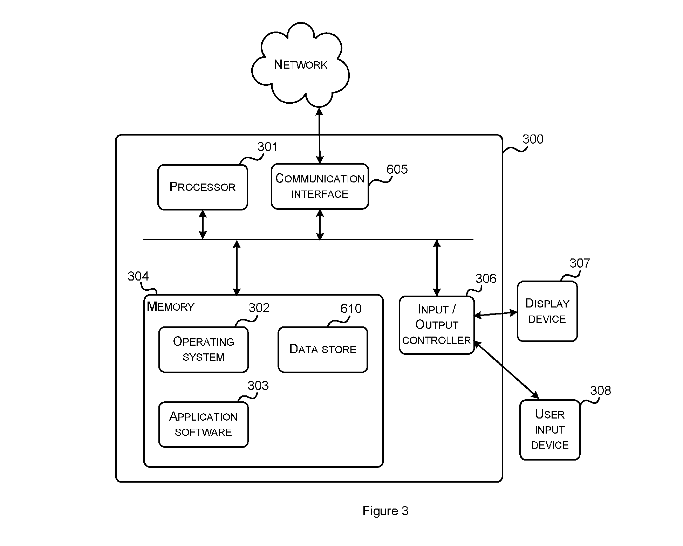

Figure 3 illustrates various components of an exemplary mobile device 300 which may be implemented as any form of a computing and/or electronic device, and on which embodiments of the foregoing description may be implemented.

Computing-based device 300 comprises one or more processors 301 which may be microprocessors, controllers or any other suitable type of processors for processing computer executable instructions to control the operation of the device in order to run applications, such as communication applications and the history application referred to herein. In some examples, for example where a system on a chip architecture is used, the processors 301 may include one or more fixed function blocks (also referred to as accelerators) which implement a parts of the methods of operation of the mobile device or applications described herein in hardware (rather than software or firmware). Platform software comprising an operating system 302 or any other suitable platform software may be provided at the computing-based device to enable application software 303 to be executed on the device.

The computer executable instructions may be provided using any computer-readable media that is accessible by computing based device 300. Computer-readable media may include, for example, computer storage media such as memory 304 and communications media. Computer storage media, such as memory 304, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 304) is shown within the computing-based device 300 it will be appreciated that the storage may be distributed or located remotely and accessed via a network or other communication link (e.g. using communication interface 605).

The computing-based device 300 also comprises an input/output controller 306 arranged to output display information to a display device 307 which may be separate from or integral to the computing-based device 300. The display information may provide a graphical user interface. The input/output controller 306 is also arranged to receive and process input from one or more devices, such as a user input device 308 (e.g. a touch screen or keypad). This user input may be used to provide user input to the communications and history applications. In an embodiment the display device 307 may also act as the user input device 308 if it is a touch sensitive display device. The computing-based device may also be provided with other functionality as is known for such devices. For example, the communication interface 605 may comprise a radio interface to a mobile telephone or other wireless communications system, and a microphone, speaker, and camera may be provided for voice and video calling.

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

## Claims

1. A communications system, comprising
a plurality of communication services, and
a communications history service,
wherein each of the plurality of communication services are configured to transmit data representative of at least one parameter of communications implemented using that service to the communications history service.

2. A communications system according to any preceding claim, wherein the communication services comprise a networked server configured to direct communications data between first and second terminal devices.

3. A communications system according to claim 1, wherein at least one of the communication services is a telephony service, and/or a messaging service.

4. A communications system according to claim 1, wherein at least one of the communication services is a telephony service and comprises a networked server configured to direct audio or video data between first and second terminal devices.

5. A communications system according to claim 1, wherein at least one of the communication services is a messaging service and comprises a networked server configured to direct message text data between first and second terminal devices.

6. A communications system according to claim 2, wherein the communication services connect with terminating devices via a network to provide communications between those terminating devices.

7. A communications system according to any preceding claim, wherein the at least one parameter comprises the time and/or date of the communication, parties of the communication, the type of communication, or communications content.

8. A communications system according to any preceding claim, wherein the communication history service comprises a networked server configured to receive and store the data representative of at least one parameter of communications.

9. A communications system according to any preceding claim, wherein the communication history service is accessible by a terminal device to view the data representative of at least one parameter of communications.

10. A communications system according to any preceding claim, further comprising a media storage service for recording and storing media data, wherein at least one of the communication services is configured to transmit media data of communications implemented using that communication service to the media storage service.

11. A communications system according to claim 9 or claim 10, wherein the media storage service is connected to the communications history service to correlate recorded media data with the data representative of at least one parameter of the communication to which the media data relates.

12. A method of presenting at least one parameter of a communication to a user, comprising the steps of
receiving data at a communications history service from a plurality of communication services, the data being representative of at least one parameter of a communication implemented utilised that service, and
transmitting the data to a terminating device for display on that terminating device.

13. A method according to claim 12, wherein the communication services comprise at least one telephony service and at least one messaging service,

14. A method according to claim 12, further comprising the step of receiving media data at a media storage service from at least one of the plurality of communication services, the media data representing communications implemented by the communication services.

15. A network of computer systems, comprising
a first computer system providing a first communications service to terminal devices, a second computer system providing a second communications service to the terminal devices,
a third computer system providing communication history services,
wherein the first and second computer systems are configured to transmit data representative of at least one parameter of communications implemented using that service to the third computer system.
